(19)

Europäisches
Patentamt
European
Patent Office
Office européen
des brevets

(11) **EP 3 483 794 A1**

(12) **EUROPEAN PATENT APPLICATION**

(43) Date of publication:
**15.05.2019 Bulletin 2019/20**

(51) Int Cl.:
***G06N 3/08*** *(2006.01)* ***G06N 99/00*** *(2019.01)*

(21) Application number: **17200577.9**

(22) Date of filing: **08.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Technologies Oy**
**02610 Espoo (FI)**

(72) Inventors:
• **JORDAN, Sandor**
**1083 Bókay János utca 36-42, (HU)**

• **NEMES, Csaba**
**1083 Bókay János utca 36-42, (HU)**

(74) Representative: **Nokia EPO representatives**
**Nokia Technologies Oy**
**Karaportti 3**
**02610 Espoo (FI)**

Remarks:
Amended claims in accordance with Rule 137(2) EPC.

(54) **CLOUD-BASED STORAGE FOR HETEROGENEOUS CLOUD ROBOTICS**

(57) Methods and apparatus, including computer program products, are provided for cloud-based storage for heterogeneous robots. In some example embodiments, there may be provided a method that includes receiving, by a cloud server including a machine learning model in a training phase, training data; storing, by the cloud server, a configuration of the machine learning model; receiving, by the cloud server including the trained machine learning model in an operations phase, a request, from at least one apparatus, for the model training data; creating, by the trained machine learning model in the operations phase, the model training data; and providing, by the cloud server including the trained machine learning model in the operations phase, the response including the model training data to the at least one apparatus. Related systems, methods, and articles of manufacture are also described.

EP 3 483 794 A1

## Description

### Field

The subject matter described herein relates to cloud-based machine learning, more particularly to cloud-based robotic machine learning.

### Background

Robots are becoming an increasingly prevalent part of society- from the factory floor where robots move goods, paint, weld, and perform other tasks, to the home where robots vacuum, mop the floor, and perform other tasks. While some complex robots can autonomously or semi-autonomously perform complex tasks and have human-like characteristics, such as a voice, arms, legs, machine vision, and/or other characteristics, some robots may not have these human-like characteristics but instead be configured as a machine for performing one or more repetitive tasks. In both cases, the robots may include artificial intelligence (AI) to enable the robot to perform one or more tasks. Often the AI takes the form of machine learning, in which case the robot can learn and improve the way it performs a task.

### Summary

Methods and apparatus, including computer program products, are provided for cloud-based storage for heterogeneous robots.

In some example embodiments, there may be provided a method that includes receiving, by a cloud server including a machine learning model in a training phase, training data, the received training data enabling the machine learning model to train to create, as an output, model training data representative of the received training data; storing, by the cloud server, a configuration of the machine learning model, the configuration being representative of a trained machine learning model trained to output the model training data representative of the received training data; receiving, by the cloud server including the trained machine learning model in an operations phase, a request, from at least one apparatus, for the model training data; responsive to the request, creating, by the trained machine learning model in the operations phase, the model training data; and providing, by the cloud server including the trained machine learning model in the operations phase, a response including the model training data to the at least one apparatus to enable training of at least one other machine learning model at the at least one apparatus.

In some other embodiments, an apparatus is described. This apparatus comprises at least one processor; and at least one memory including program code which when executed causes the apparatus to at least:receive, by a machine learning model in a training phase, training data, the received training data enabling the machine learning model to train to create, as an output, model training data representative of the received training data; store a configuration of the machine learning model, the configuration being representative of a trained machine learning model trained to output the model training data representative of the received training data; receive, by the trained machine learning model in an operations phase, a request, from at least one apparatus, for the model training data; responsive to the request, create, by the trained machine learning model in the operations phase, the model training data; and provide, by the trained machine learning model in the operations phase, a response including the model training data to the at least one apparatus to enable training of at least one other machine learning model at the at least one apparatus.

In some other embodiments, a non-transitory computer-readable medium including program code which when executed causes operations comprising receiving, by a cloud server including a machine learning model in a training phase, training data, the received training data enabling the machine learning model to train to create, as an output, model training data representative of the received training data; storing, by the cloud server, a configuration of the machine learning model, the configuration being representative of a trained machine learning model trained to output the model training data representative of the received training data; receiving, by the cloud server including the trained machine learning model in an operations phase, a request, from at least one apparatus, for the model training data; responsive to the request, creating, by the trained machine learning model in the operations phase, the model training data; and providing, by the cloud server including the trained machine learning model in the operations phase, a response including the model training data to the at least one apparatus to enable training of at least one other machine learning model at the at least one apparatus.

In some variations, one or more of the features disclosed herein including the following features can optionally be included in any feasible combination. The machine learning model may include at least one of a generative model, a deep learning generative model, and/or a neural network. Responsive to the storing, the cloud server may delete the received training data. The model training data may simulate the received training data. The model training data may be statistically likely to occur in the received training data. The machine learning model may be trained, based on the received training data, to create the output comprising the model training data, when the machine learning model is in the training phase. The at least one apparatus may comprise, or may be comprised in, at least one robot including the at least one other machine learning model to be trained. The received training data may be received from at least one other apparatus. The received training data may include labels indicative of a classification of the received training data. The request for model training data may include a source address of the request, an identity of the other machine learning model, a type of task, and/or a sample of data and/or an image to be learned. The request may be triggered by the at least one apparatus including the at least one other machine learning model failing to perform a task associated with the at least one other machine learning model.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

## Description of Drawings

In the drawings,

FIG. 1A depicts an example of a system including a heterogeneous system of robots, in accordance with some example embodiments;
FIG. 1B further depicts the system including the heterogeneous system of robots, in accordance with some example embodiments;
FIG. 2A depicts an example of a neuron for a neural network, in accordance with some example embodiments;
FIG. 2B depicts an example of a neural network including at least one neuron, in accordance with some example embodiments;
FIG. 3 depicts a process for cloud-based learning in a heterogeneous system of robots, in accordance with some example embodiments;
FIG. 4 depicts an example of a computing system, in accordance with some example embodiments; and
FIG. 5 depicts an example of an apparatus, in accordance with some example embodiments.

Like labels are used to refer to same or similar items in the drawings.

## Detailed Description

Today, robots can function like separate islands of functionality. These robots can operate without communicating with one another. Nor do these robots need to learn from one another's experiences. However, communication between robots (including AI components associated with the robots) may enable a knowledge exchange of information, which may facilitate faster training and/or better overall performance. The knowledge exchange among robots may be directly between the robots using for example a link directly between the robots, or the knowledge exchange may be via a cloud server, such as an Internet coupled physical server for computational offloading and/or data collection. For example, one or more robots may provide knowledge to the cloud server to enable another robot to access that knowledge for purposes of training another robot. In the case of cloud server-based system, the robot technology may be referred to as cloud robotics. The embodiments of this divulgation can also be applied to other type of apparatus and not only to robots.

In the case of cloud robotics, the robots may couple to the cloud server. For example, a robot may include a sensor that generates and sends information to the cloud server, which may provide a response. To illustrate further, the robot may include a surveillance sensor which captures image(s) of a possible threat. The robot may send to the cloud server these images including a label indicative of the type of possible threat, as determined by an artificial intelligence (AI) component at the robot. And, the cloud server may respond with additional instructions or a confirmation. In some cases, the cloud server's response may be generated by an AI component at the cloud server. For example, the robot including an AI component may detect a potential threat but not be sufficiently confident of the detected threat. When this is the case, the robot may send data, such as the image of the threat, to the cloud server also having an AI component. In this example, the cloud server's AI component may have the benefit of data from other robots, so the cloud server including the AI component may be able to do a better job detecting the potential threat, when compared to the robot itself (which may have never detected the threat type or may have little knowledge, or learning, for the threat type). Here, the cloud server's AI component may respond to the robot with an indication of whether the image is of the threat. Alternatively or additionally, the cloud server's AI component may respond to a robot with training data to enable the robot to train so that the robot can learn how to classify the image as a threat or not. As used herein, "training data" may refer to input data that can be used to train a machine learning model or other type of AI component. The training data may be labeled, in the case of supervised learning, although the training data me be unlabeled as well in the case of unsupervised learning.

In some example embodiments, the robots coupled to the cloud server may be heterogeneous. In a heterogeneous system, some of the robots may be different with respect to the type of robots, how the robots learn, the AI technology being used by the robots, sensors carried by the robots, and/or the like. Referring to the previous example, the heterogeneous robots may learn to detect potential threats using different types of AI technology. For example, a first robot may implement a neural network of first type or topology, while a second robot may implement a neural network of second, different type of topology or use another machine learning model, such as a support vector machine. In this heterogeneous system of robots, sharing of knowledge among robots to facilitate learning is more difficult, when compared to a homogeneous system of robots having, for example, the same type of AI technology, the same sensors, and/or the like.

In some example embodiments, the cloud server may be configured to generate (e.g., create) and provide training data that enables the training of robots in a heterogeneous system of robots configured to exchange knowledge with the cloud server. In some example embodiments, the training data may include labels indicative of the classification of the training data. In some example embodiments, the cloud server may provide the training data as a service to registered users or robots.

In some example embodiments, the cloud server may receive over time information provided by the heterogeneous robots. The information may include data provided by a robot, and this data may include a label, which can be used to train at least one other robot. Rather than use a data storage intensive approach in which all the received data over time from all of the robots is stored to enable training of other robots, the cloud server's AI component may, in accordance with some example embodiments, train to provide a model that can generate a representation of the data received from the robots. In some example embodiments, this AI component may use a machine learning model to generate a model, such as the probability density distribution(s) or function(s), representative of the training data being generated by the heterogeneous robots. For example, the machine learning model may learn, from the training data, the statistics of the training data. When trained, the machine learning model can then create and output new training data (referred to herein as model training data) for other robots.

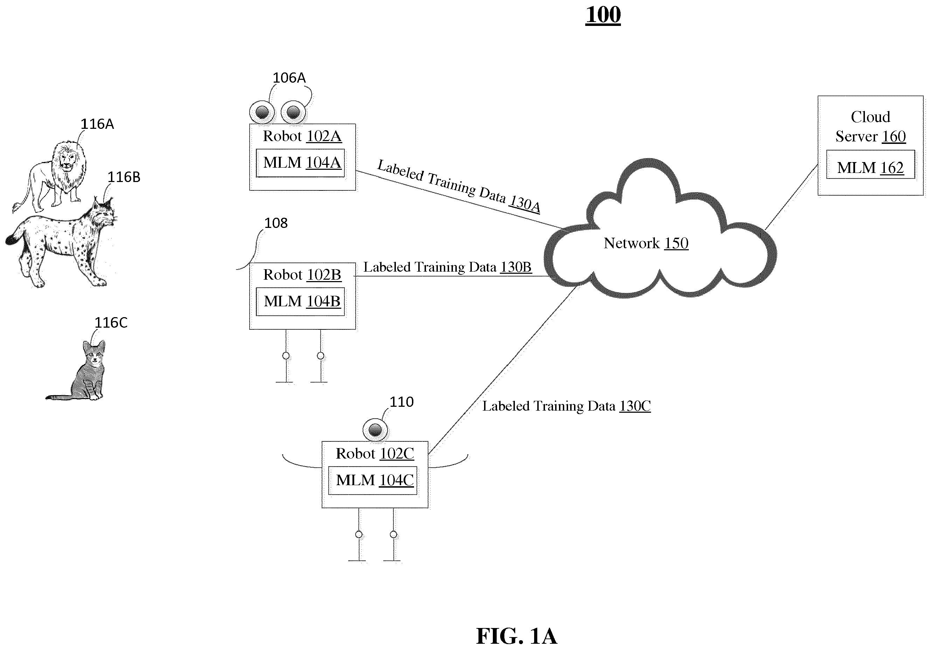

FIG. 1A depicts an example of a system 100 including a heterogeneous group of robots 102-C coupled, via a network 150, to a cloud server 160, in accordance with some example embodiments. The robots 102A-C may be considered heterogeneous in the sense that the robots may include different types of sensors, include different types of AI components or technology, and/or the like. For example, the robot 102A may implement a first type of machine learning model 104A, such as a neural network having a first type or topology (e.g., a convolutional neural network), while robot 102B may implement a second, different type or topology of machine learning model 104B (e.g., a multi-column convolutional neural network, a support vector machine, and/or the like).

As used herein, the term "robot" refers to an apparatus, such as a machine, that performs at least one task and includes at least one AI component, such as a machine learning (ML) model, to facilitate performing the at least one task. The AI component may enable the robot to learn a task. The robot may be implemented on a variety of computer-based hosts to perform at least one task. The at least one task may range from a simple detection or classification task to a more complex task, such as those tasks requiring machine vision, movement, driving, flying, and/or fine motor skills. The robot may include at least one processor including memory storing the instructions for performing the tasks of the robot. The robot may also include apparatus to enable movement (e.g., robotic arms, legs, fingers, wheels, and/or the like). Furthermore, the robot may include at least one sensor to facilitate performing its task.

In some example embodiments, the robot 102A may include a sensor 106A, such as an image sensor (which in this example represents two imaging sensors enabling stereoscopic and/or depth related image capture), although other types of sensors may be used as well at the robot 102A. Moreover, the robot 102A may include an AI component in the form of a ML model 104A (labeled MLM). For example, the ML model 104A may be able to learn via training how to perform a task, which in the instant example detects in the sensor's images an object and classifies whether the object represents a threat, such as possible threats 116A-B versus a non-threat 116C.

The robot 102A including the ML model 104A may detect and classify objects over time. When this is the case, the robot 102A may send to the cloud server 160 labeled training data 130A via a network, such as network 150 to enable training a ML model 162 at the cloud server 160. For example, the labeled training data 130A may include an image from which an object is detected and classified by the ML model 104A as being a threat or a non-threat. In this way, as objects are classified and labeled, the robot 102A may send, to cloud server 160 and ML model 162, the object and label as labeled training data 130A. To illustrate further, the labeled training data 130A may include a first image of a lion 116A with an associated label of "threat" (or "lion"), a second image of a cat 116C with an associated label of "non-threat" (or "cat"), and/or other images and labels as collected and classified over time.

In the example of FIG. 1A, the robot 102B may include a sensor 108 and an ML model 104B. The robot 102B may, in the case of a heterogeneous system, be different with respect to the type of sensor 108 and/or the type of AI being used by the ML model 104B. In the example of FIG. 1A, the robot 102B may collect radar data, so that the ML model 104B may detect and classify whether radar data includes an object of interest, such as the threat 116A-B or the non-threat 116C. Like robot 102A, the robot 102B may over time send to the cloud server 160 labeled training data 130B to enable training of the ML model 162 at the cloud server 160. In this current example, the labeled training data 130B may include radar data corresponding to the lion 116A with an associated label of "threat," radar data corresponding to the lynx 116B and a "threat" label, radar data corresponding to the cat 116C with an associated label of "non-threat," and/or other radar data and labels as collected and classified over time.

Like robots 102A-B, the robot 102C may include a sensor 110 and an ML model 104C. The robot 102C may, in the case of a heterogeneous system, be different from at least one of the other robots with respect to the type of sensor 110, the type of AI being used by the ML model 104C, and/or the like. In the example of FIG. 1A, the robot 102C may collect image data using a single image sensor 110, while the ML model 104C may detect and classify whether the captured image data includes an object of interest, such as the threat 116A-B or the non-threat 116C. Like robots 102A-B, the robot 102C may over time send to the cloud server 160 labeled training data 130C to enable training of the ML model 162. For example, the labeled training data 130C may include image data corresponding to the lion 116A with an associated label of "threat," image data corresponding to the lynx 116B and a "threat" label, image data corresponding to the cat 116C with an associated label of "non-threat," and/or other images and labels as collected and classified over time.

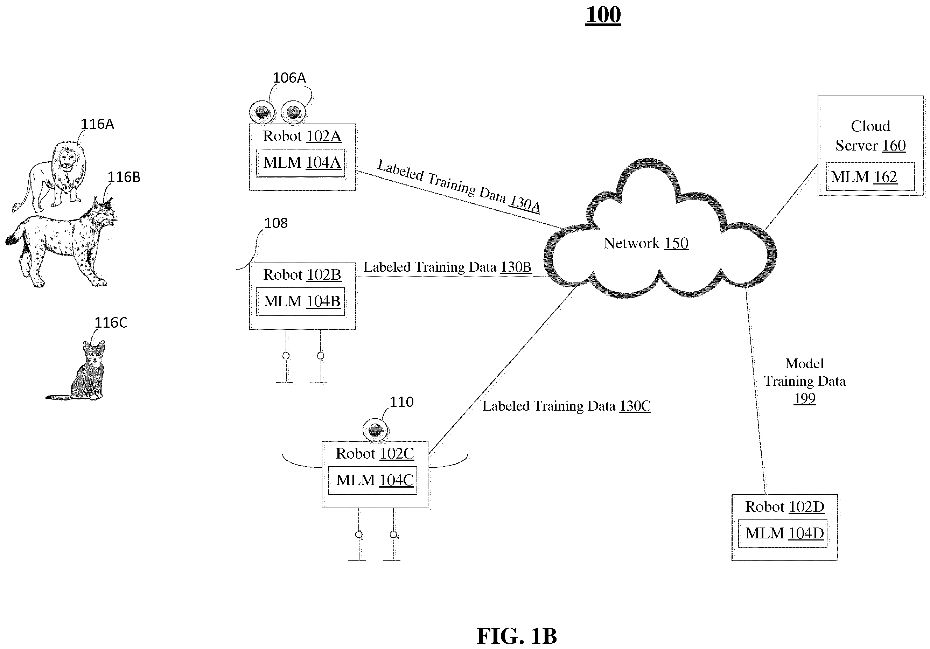

FIG. 1B depicts the system of FIG. 1A, when another robot such a robot 102D, needs to be trained, in accordance with some example embodiments. The robot 102D may couple, via network 150, to the cloud server 160 to obtain the model training data 199 created by the ML model 162 when trained.

The example of FIG. 1B illustrates that in the heterogeneous system 100 of robots 102A-D, a large amount of data may be generated by the robots 102A-D and sent to the cloud server 160, creating a huge storage requirement on the cloud server 160. And, as the quantity of robots increases, the amount of data sent to the server 160 increases. To make matters worse, the robots can send training data to the server 160 repeatedly over time. But the cloud server's ML model 162 may, in accordance with some example embodiments, learn to model the actual training data, so all of the actual training data generated over time does not need to be stored by the cloud server 162. Instead, the ML model 162 can be configured (for example, by learning or training) to generate (e.g., create), in accordance with some example embodiments, model training data 199 that is representative of some, if not all, of that actual training data 130A-C. To illustrate by way of the current example, the ML model 162 may be configured (for example, by learning or training) to generate model training data 199 in the form of sample images of lions, lynxes, and cats, and/or corresponding labels which may indicate whether the image represents a threat or non-threat (or, for example, labels indicative of the type of threat, such as cat, lion, and/or the like). The model training data 199 may be statistically similar to what the ML processed in the way of actual training data 130A-C from the other robots during the training phase of the ML model 162.

Although the example of FIG. 1B depicts a certain quantity of robots, networks, and cloud servers, other quantities of robots, networks, and cloud servers may be included in the system 100 as well.

In some example embodiments, the ML model 162 may train, based on the received, training data 130A-C (which may include labels indicative of the classification determined by the ML models 104A-C). In some example embodiments, the ML model 162 may train to learn the statistics (e.g., the distribution or probability density function) of the actual training data 130A-C provided as an input to the ML model 162 by the robots 102A-C. When trained, the ML model 162 may be considered to be in an operations phase. When this is the case, the trained ML model 162 may not need to retain all of the actual training data submitted from all of the robots 102-C, but instead the trained ML model 162 may generate anew (e.g., create) its own model training data that is statistically similar to the actual training data 130A-C provided during the training phase of the ML model 162.

When the ML model 162 is trained, the ML model 162 may generate, in accordance with some example embodiments, model training data 199 that is representative of the actual training data 130A-C. For example, the ML model 162 may comprise a generative model, in which case the ML model 162 trains to learn at least one probability density function or distribution that is able to generate model training data representative of the actual training data 130A-C provided by the heterogeneous robots 102A-C during the training phase. The model training data may be considered "representative" of the actual training data as the model training data may not be a perfect reproduction of the actual training data. In the case of image data for example, the model training data may be not be a perfect reproduction (e.g., have errors or be lossy - given a pixel-wise distance error calculation), when compared to the actual training image data 130A-C.

In the case of image data, the trained ML model 162 may, in an operations phase, generate, as model training data 199, new images having pixels that are statistically likely to occur (given the actual training data 130A-C provided during the training phase of the ML model 162). For example, the ML model 162 may comprise a generative model which learns the statistics of the actual training data 130A-C provided at the input to the ML model 162. When trained, the generative model can output model training data 199 (FIG. 1B) for robots, and this model training data may be statistically similar to the actual training data 130A-B. In this way, the ML model comprising a generative model can generate new model training data having, for example, pixels that are statistically likely to occur.

In the case of the ML model 162 comprising a generative model, the ML model 162 may generate statistically likely images as model training data 199 to train the robot 102D. For example, the ML model 162 may provide model training images 199 for a variety of tasks, such as all the possible threats and non-threats (e.g., lions, cats, dogs, and/or the like). Alternatively or additionally, the ML model 162 may provide, as model training data 199, a specific type of image having a specific type of label. For example, if robot 102D requests "cat" training data, the ML model 162 may respond with newly generated model training data 199 of cat images to provide to robot 102D. Alternatively or additionally, the ML model 162 may provide, as model training data 199, images which are similar to a given image (e.g., similar with respect to internal, latent features of the given image). For example, the robot 102D may send the actual image of a cat, and in response the ML model 162 may send model training data 199 having similar features as the given image of the cat.

In some example embodiments, the cloud server 160 may represent a service accessible by robots for at least training, in accordance with some example embodiments. For example, when a system of robots is serviced by the cloud server 160, the cloud server 160 may be configured with a predetermined, maximum amount of storage as the cloud server 160 including the ML model 162 has more deterministic storage requirements, when compared to other approaches such as the above-noted storing all the training data for all of the robots over time approach.

Moreover, although the previous example uses the example of the robots having imaging sensors and/or a radar, other types of sensors and/or other types of data may be used as well. Examples of other types of sensors include a gyroscope, a GPS sensor, a temperature sensor, a pressure sensor, accelerometer, microphone, and/or the like.

In addition, although some of the examples refer to the robot performing an image detection task, other types of tasks may be performed by the root as well. To illustrate further, robots 102A-C may be robots at a factory performing at least one task such as painting, welding, mounting a component, and/or the like. In this example, robots 102A-C may have an image sensor for machine vision (which may include a corresponding ML model for machine vision tasks) and an articulating arm (which may include a corresponding ML model for movement/articulation). When another robot, such as robot 102D is brought on the factory floor and thus needs to be trained, the robot 102D may couple to cloud server 160 to obtain the model training data 199 to enable training for the machine vision task and/or the movement/articulating arm task.

Network 150 may comprise a wireless network, such as a cellular network, a wireless local area network, and/or other types of wireless networks, wired networks, the Internet, and/or the like. In some example embodiments, the robots 102A-D may access one or more servers 160 (including corresponding ML models 162) at the edge of the network 150 (e.g., at wireless access nodes, base stations, WiFi access points, and/or the like). In this edge configuration, the latency related to accessing the edge-based cloud server can be reduced, when compared to coupling the cloud server in the core network or in other remote locations.

In some example embodiments, the cloud server's ML model 162 may be implemented as neural network, such as a generative model including a deep generative model, an autoencoder neural network, and/or other types of ML models configured to learn to reproduce anew an output that is at least similar to a training data input. Some examples of generative ML models include deep generative, de-noising autoencoders, autoencoders, and/or the like. These and other ML models are described in the book, Deep Learning by Ian Goodfellow, Yoshua Bengio, and Aaron Courville, MIT Press, 2016, " Generative Adversarial Nets," by Ian J. Goodfellow et al., "Unsupervised and Semi-Supervised Learning with Categorical Generative Adversarial Networks,", by Jost Tobias Springenberg, and "Auto-Encoding Variational Bayes," Diederik P. Kingma et al. A machine learning model may represent a model that can learn a task without being explicitly programmed to perform the task.

In some example embodiments, the ML model 162 may, as noted, be configured as a generative ML model that models the input data itself, such as the labeled training data 130A-C. To that end, the generative ML model may learn, with for example training of the generative ML model, a joint probability density, or distribution. For example, given an input, x, and an output, y, the generative ML model may learn the joint probability distribution $p(x, y)$. In other words, the generative ML model may learn how to model the input data, such as the labeled training data 130A-C being provided by the robots 102A-C. In some example embodiments, the generative ML model 162 may be implemented as a neural network that is trained, based on the labeled training data 130A-C, to learn the joint probability density or distribution that provides modeled training data outputs, which can be provided to another robot, such as robot 102D. Although the previous example described a bivariate example, the learning may be over higher dimensions of variables.

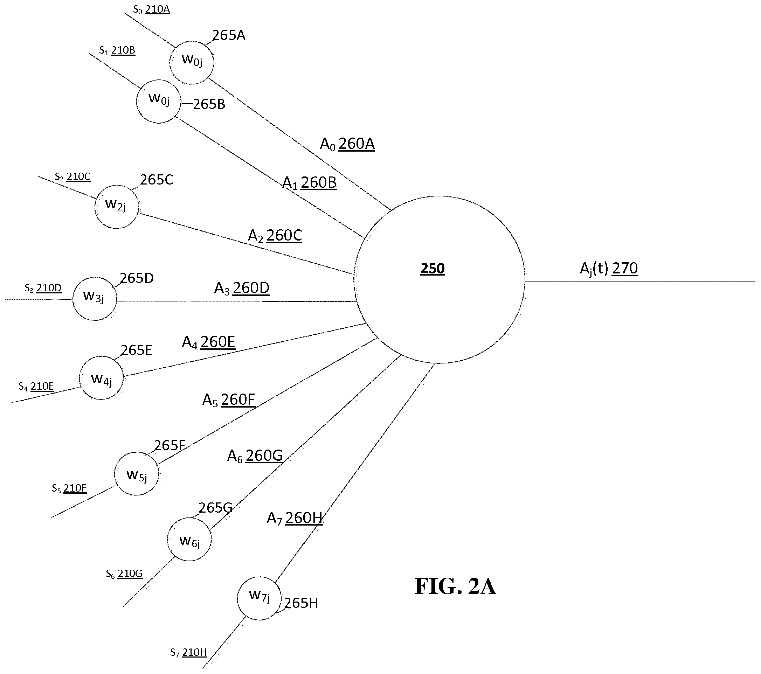

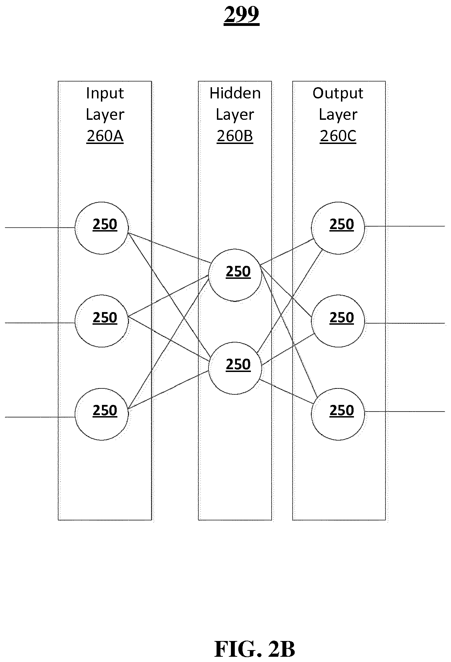

In some example embodiments, the ML model 162 may, as noted, be implemented as a neural network. FIG. 2A depicts an example of an artificial neuron $A_j$ 250 which may be implemented in the neural network, in accordance with some example embodiments. The neurons 250 may be connected to form the neural network 299, as described with respect to FIG. 2B below.

Referring to FIG. 2A, the neuron 250 may generate an output $A_j(t)$ 270 based on activation values $A_i(t-1)$ (which correspond to $A_0$-$A_7$) 260A-H, connection weights $w_{ij}$ 265A-H (which are labeled $w_{oj}$ through $w_{7j}$), and input values 210A-H (labeled $S_0$-$S_7$). At a given time, t, each one of the activation values 260A-H may be multiplied by one of the corresponding weights 265A-H. For example, connection weight $w_{oj}$ 265A is multiplied by activation value $A_o$ 260A, connection weight $w_{1j}$ 265B is multiplied by activation value $A_1$ 260B, and so forth. The products (i.e., of the multiplications of the connections and activation values) are then summed, and the resulting sum is operated on by a basis function K to yield at time t the output $A_j(t)$ 270 for node $A_j$ 250. The outputs 270 may be used as an activation value at a subsequent time (e.g., at t+1) or provided to another node.

The neuron 250 may be implemented in accordance with a neural model such as:

$$A_j(t) = K\left[\sum_{i=0}^{n} A_i(t-1) * W_{ij}\right]$$ **Equation 1,**

wherein K corresponds to a basis function (examples of which include a sigmoid, a wavelet, and any other basis function), $A_j(t)$ corresponds to an output value provided by a given neuron (e.g., the $j^{th}$ neuron) at a given time t, $A_i(t-1)$ corresponds to a prior output value (or activation value) assigned to a connection i for the $j^{th}$ neuron at a previous time t-1, $w_{ij}$ represents the $i^{th}$ connection value for the $j^{th}$ neuron, wherein j varies in accordance with the quantity of neurons, wherein the values of i vary from 0 to n, and wherein n corresponds to the number of connections to the neuron.

It will be appreciated that FIG. 2A represents a model of the neuron 250 and the neuron 250 can have other configurations including quantities of inputs and/or quantities of outputs. For example, the neuron 250 may include a plurality of inputs to receive the pixel related values of an image.

FIG. 2B depicts neurons 250 of a neural network 299, in accordance with some example embodiments. The neural network may be used to provide the ML model 162, in accordance with some example embodiments.

The neural network 299 may include an input layer 260A, one or more hidden layers 260B, and an output layer 260C. Although not shown, other layers may be implemented as well, such as a pooling layer. It will be appreciated that the neural network 299 3-2-3 node structure is used to facilitate explanation and, as such, the neural network 299 may be structured in other configurations.

During the training of neural network 299, the labeled training data 130A-C provided by robots 102A-C may be fed as an input to the input layer 260A neurons over time (e.g., t, t+1, etc.) until the neural network 299 learns to model the input data (which in this example is the labeled training data) at the output layer 260C. For example, the neural network 299 may operate repeatedly over time until the input data at the input layer 260A can be modeled at the output layer within a threshold error (e.g., a threshold mean squared error or some other type of threshold). To illustrate, the neurons 250 of the network 299 may learn by optimizing a mean square error (e.g., between the labeled training data at the input layer 260A and what is generated at the output of the output layer 260C) using gradient descent and/or the like. When the neural network 299 is trained, the neural network's 299 configuration, such as the values of the weights, activation values, basis function, and/or the like, can be saved to storage. This saved configuration represents the ML model 262 that can be used to provide the model training data, in accordance with some example embodiments.

The neuron 250 including the neural network 299 may be implemented using code, circuitry, and/or a combination thereof. In some example embodiments, the neuron 250 and/or the neural network 299 (which includes the neurons 250) may be implemented using specialized circuitry including, for example, at least one graphics processing unit (which is configured to better handle parallel processing, matrix operations, and/or the like when compared to a traditional central processing unit) or dedicated neural network circuitry.

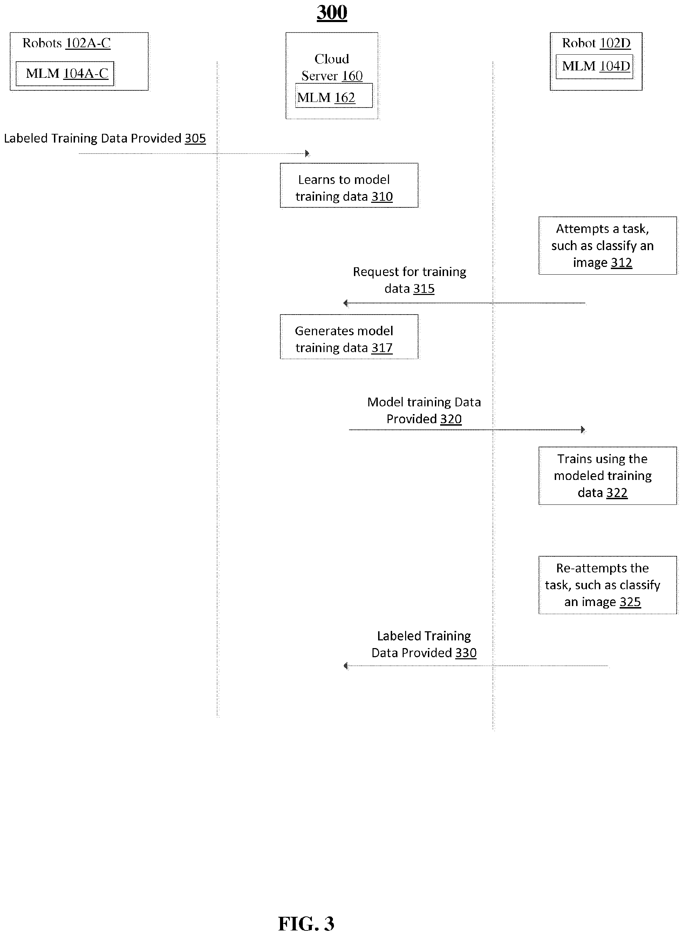

FIG. 3 depicts an example of a process 300, in accordance with some example embodiments. Process 300 depicts robots 102A-C, cloud server 160, and a robot 102D including ML model 104D to be trained for a given task. The description of FIG. 3 also refers to FIGs. 1A-B.

At 305, robots 102A-C may send, via network 150, to the cloud server 160 labeled training data, in accordance with some example embodiments. For example, the robots 102A-C may provide, to the cloud server, data 130A-C with corresponding labels indicative of a classification as noted above with respect to FIGs. 1A-B. This data 130A-C may be considered training data sent to the cloud server 160 from time to time (e.g., when requested by the cloud server or at the discretion of the robot). Although some of the examples refer to labeled training data, the training data may not be labeled.

In some example embodiments, a given robot may perform a plurality of tasks. As such, the robot may have a plurality of corresponding ML models that are associated with the tasks. For example, the robot 102A may have an image sensor for machine vision (and thus a first ML model for machine vision tasks) and an articulating arm for performing a task such as painting and/or the like (and thus a second ML model for movement). In this example, the cloud server 160 may have a plurality of ML models for different tasks. The robot 102A may provide training data with at least (1) a label indicative of the classification and/or (2) an indicator of the type of task (and/or an identity of the ML model) associated with the training data. To illustrate further, the robot 102A may send, as training data 130A, images including a classification label and an indicator that the training data is for the machine vision task (or an indication of the corresponding ML model for machine vision, for example). The robot 102A may send, as training data 130A, data associated with the movement task and an indicator that the training data is for the movement task (or an indication of the corresponding ML model for movement, for example). Alternatively or additionally, the robot 102B may send, as training data 130B, images for an ML model associated with the machine vision task and an indicator that the images are or the machine vision task. In this way, the cloud server 162 can segregate, to an appropriate ML model at server 160, the machine vision associated training data from the movement associated training data.

At 310, the ML model 162 may learn to model the training data, in accordance with some example embodiments. During training, the ML model 162 may receive, as an input, the labeled training data 130A-C. Over time, the ML model may learn, based on the input, to model, as an output, the input data (which in this example is the labeled training data). When trained, the trained ML model 162 in an operations phase may create and/or provide, as an output, model training data, such as model training data 199. As noted above, the ML model 162 may be implemented as a neural network, in which case the ML model would be trained to learn to converge to a solution (using, for example, gradient and/or the like). When this is the case, the trained ML model 162 may create and/or provide model training data, in accordance with some example embodiments.

At 312, the robot 102D including ML model 104D may attempt to perform a task, such as classify an input image, in accordance with some example embodiments. However, the robot 102D including ML model 104D may not be able to perform the task and/or not be able to perform the task with a sufficient degree of accuracy. For example, the robot 102D including ML model 104D may capture an image of a cat 116C, but have an insufficiently trained ML model 102D to accurately classify the image as a threat, non-threat, and/or the type of animal (for example, a cat). To illustrate further, the robot's ML model 104D may be configured as a convolutional neural network. In the current example, the robot 102D including ML model 104D may attempt to classify the input image but the ML model 104D may not confident regarding it's classification as shown by Table 1. In the example of Table 1, the ML model 104D cannot classify the object in the captured image with a sufficient degree of certainty. At Table 1, the ML model 104D may indicate that the likelihood that the image includes a cat is 23%.

In some example embodiments, the robot 104D may request, at 315, training data from the cloud server 160, when the ML model 104D cannot classify an input image or cannot classify the image with sufficient certainty. In the example of Table 1, the ML model 104D cannot classify the cat with any degree of certainty given that the likelihood of the image containing a housecat is only 23%, which is less than a threshold of for example, 50% (which represents a guess). The request sent at 315 may, in accordance with some example embodiments, identify the source ML model 104D, the type of task being performed, the type of data being requested for training, the target ML model 162, and/or an example (or sample) of the data (e.g., image, such as the cat) that training data is needed (e.g., because the data/image could not be properly classified). Alternatively or additionally, the request sent at 315 may indicate a need for training data.

Although the previous example used a threshold of 50%, other thresholds may be used as well including, for example, 90%, 95%, 99%, and/or any other value indicative that the classification is more likely than not to be accurate.

Table 1

| Species | Housecat | Puma | Young lion | Young panther | Dog | Human |
|---------|----------|------|------------|---------------|-----|-------|
| Confidenc | 23% | 22% | 19% | 19% | 17% | 5% |

At 317, the cloud server 160 may generate model training data, in accordance with some example embodiments. To respond to the request, the cloud server 160 may generate, based on ML model 162, one or more model training data, such as images. These images may include labels to allow the ML model 104D (such as the CNN of the current example) to learn to classify the cat from other animals (and/or the cat as a threat or a non-threat). For example, the cloud server 160 may generate, based on ML model 162, one or more model training data of cats including labels classifying the cats. Alternatively or additionally, the cloud server 160 may generate, based on ML model 162, one or more model training data of other animals, objects, and/or the like including labels classifying those images.

In response to request 315, the cloud server 160 may provide, at 320, to the robot 102D the generated model training data, in accordance with some example embodiments. Returning to the previous example, the cloud server may provide as model training data images 199 (which may include labels) to allow the ML model 104D to learn to classify the cat from other animals (and/or the cat as a threat or a non-threat). As noted above, the model training data provided at 320 may be newly, created in response to the request, and this newly created model training data 320 may be similar (e.g., statistically similar) to what the ML model 162 processed during training using the data at 305 (see, also, 130A-C at FIG. 1A-B).

When the model training data is received, this may trigger the robot 102D to initiate training, at 322, of the ML model 104D using the received training data, in accordance with some example embodiments. Referring to the previous example, the ML model 104D may comprise a convolutional neural network (CNN). During the training of this CNN, the labeled training data 130A-C may be fed as an input to an input layer of neurons until the CNN learns how to classify the images, which are cats in this example. As noted, neural networks, such as the CNN, may operate repeatedly over time until the training converges using, for example, gradient descent to a solution (which in this example is classifying the input cat images).

At 325, the robot 102D including ML model 104D may reattempt to perform the task of classifying an input image, in accordance with some example embodiments. Referring to the current example task, the robot 102D including ML model 104D may reattempt to classify an image including a cat, but now that ML model 104D is trained it may be able to may be able to classify the cat image as a cat (and/or the cat as a threat or a non-threat) with a greater degree of accuracy. Table 2 depicts the classification after training using the model training data in accordance with some example embodiments.

Table 2

| Species | Housecat | Puma | Young lion | Young panther | Dog | Human |
|---------|----------|------|------------|---------------|-----|-------|
| Confidenc | 96% | 3% | 1% | 0% | 0% | 0% |

At 330, the robot 102D may provide labeled training data to cloud server 160 to enable the cloud server 160 to training ML model 162 based on the knowledge of robot 102D. In this way, the robot 102D may share its knowledge with other robots.

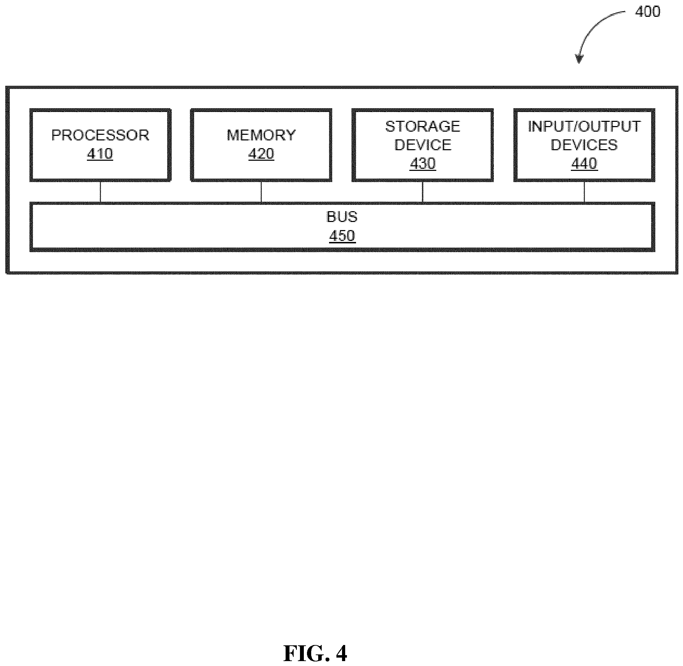

FIG. 4 depicts a block diagram illustrating a computing system 400, in accordance with some example embodiments. The computing system 400 may be used to implement the cloud server 160 and/or the processor-based aspects of robots 102A-D. For example, the ML models 162 and 104A-D may be hosted on the computing system 400. As shown in FIG. 4, the computing system 400 can include a processor 410, a memory 420, a storage device 430, and input/output devices 440. The processor 410, the memory 420, the storage device 430, and the input/output devices 440 can be interconnected via a system bus 450. The processor 410 may be capable of processing instructions for execution within the computing system 400. Such executed instructions can implement one or more aspects of ML models 162 and 104A-D as well as enable the operations described herein with respect to the cloud servers and/or robots. The processor 410 may be capable of processing instructions stored in the memory 420 and/or on the storage device 430 to display graphical information for a user interface provided via the input/output device 540. The memory 420 may be a computer readable medium such as volatile or non-volatile that stores information within the computing system 400. The memory 420 can store instructions, such as computer program code. The storage device 430 may be capable of providing persistent storage for the computing system 400. The storage device 430 can be a floppy disk device, a hard disk device, an optical disk device, or a tape device, or other suitable persistent storage mechanism. The input/output device 440 provides input/output operations for the computing system 400. In some example embodiments, the input/output device 440 includes a keyboard and/or pointing device. In various implementations, the input/output device 440 includes a display unit for displaying graphical user interfaces. Alternatively or additionally, the input/output device 440 may include wireless and/or wired interface to enable communication with other devices, such as other network nodes. For example, the input/output device 440 can include an Ethernet interface, a WiFi interface, a cellular interface, and/or other wired and/or wireless interface to allow communications with one or more wired and/or wireless networks and/or devices.

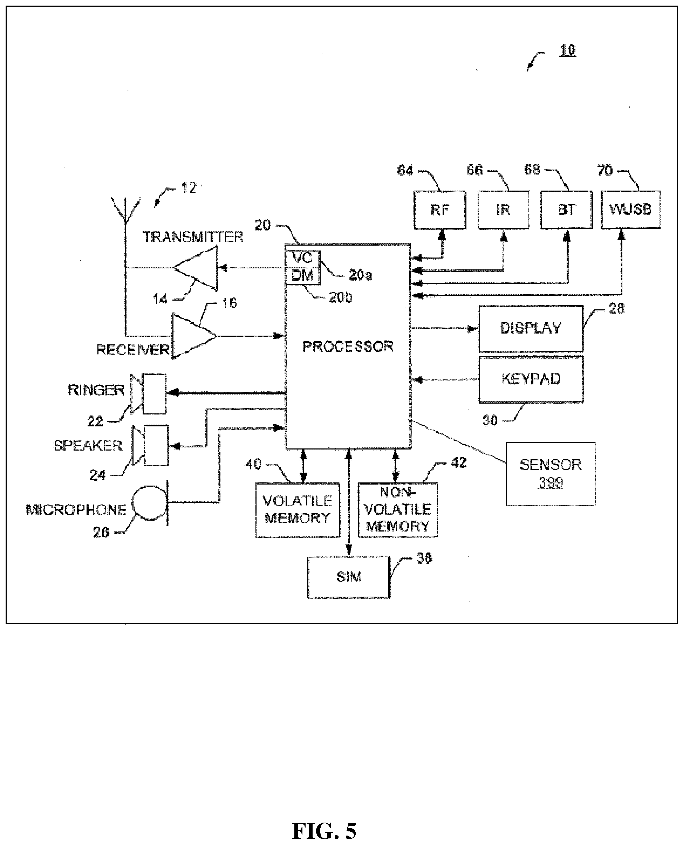

FIG. 5 illustrates a block diagram of an apparatus 10, in accordance with some example embodiments

The apparatus 10 may represent a user equipment, such as a wireless device that may be comprised in, or comprises, at least a portion of robots 102A0D to enable access, in accordance with some example embodiments, to the cloud server 160 via at least a wireless network including a cellular network. Moreover, apparatus 10 may include a sensor 399, such as a camera or other type of sensor. In example embodiments having the cloud server 160 in an edge node such as a base station, a robot may include apparatus 10 to access the base station including the cloud server 160.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise, processor 20 may be configured to control other elements of apparatus 10 by effecting control signaling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multicore processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 5 as a single processor, in some example embodiments the processor 20 may comprise a plurality of processors or processing cores.

The apparatus 10 may be capable of operating with one or more air interface standards, communication protocols, modulation types, access types, and/or the like. Signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

The apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 5, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a BluetoothTM (BT) transceiver 68 operating using BluetoothTM wireless technology, a wireless universal serial bus (USB) transceiver 70, a BluetoothTM Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein including, for example, receiving, by a cloud server including a machine learning model in a training phase, training data, the received training data enabling the machine learning model to train to create, as an output, model training data representative of the received training data; storing, by the cloud server, a configuration of the machine learning model, the configuration being representative of a trained machine learning model trained to output the model training data representative of the received training data; receiving, by the cloud server including the trained machine learning model in an operations phase, a request, from at least one apparatus, for the model training data; in response to the request, creating, by the trained machine learning model in the operations phase, the model training data; and/or providing, by the cloud server including the trained machine learning model in the operations phase, the response including the model training data to the at least one apparatus to enable training of at least one other machine learning model at the at least one apparatus.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to control and/or provide one or more aspects disclosed herein. For example, the processor 20 may be configured using computer code stored at memory 40 and/or 42 to at least including, for example, receiving, by a cloud server including a machine learning model in a training phase, training data; storing, by the cloud server, a configuration of the machine learning model; receiving, by the cloud server including the trained machine learning model in an operations phase, a request, from at least one apparatus, for the model training data; creating, by the trained machine learning model in the operations phase, the model training data; and/or providing, by the cloud server including the trained machine learning model in the operations phase, the response including the model training data to the at least one apparatus.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 6, computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein may be enhanced robot learning in a heterogeneous system of robots.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

**Claims**

1. A method comprising:

   receiving, by a cloud server including a machine learning model in a training phase, training data, the received training data enabling the machine learning model to train to create, as an output, model training data representative of the received training data;
   storing, by the cloud server, a configuration of the machine learning model, the configuration being representative of a trained machine learning model trained to output the model training data representative of the received training data;
   receiving, by the cloud server including the trained machine learning model in an operations phase, a request, from at least one apparatus, for the model training data;
   responsive to the request, creating, by the trained machine learning model in the operations phase, the model training data; and
   providing, by the cloud server including the trained machine learning model in the operations phase, a response including the model training data to the at least one apparatus to enable training of at least one other machine learning model at the at least one apparatus.

2. The method of claim 1, wherein the machine learning model comprises at least one of a generative model, a deep learning generative model, and/or a neural network.

3. The method of any of claims 1-2 further comprising:

   responsive to the storing, deleting, by the cloud server, the received training data.

4. The method of any of claims 1-3, wherein the model training data simulates the received training data.

5. The method of claim 1-4, wherein the model training data is statistically likely to occur in the received training data.

6. The method of any of claims 1-5 further comprising:

   training, based on the received training data, the machine learning model to create the output comprising the model training data, when the machine learning model is in the training phase.

7. The method of any of claims 1-6, wherein the at least one apparatus comprises, or is comprised in, at least one robot including the at least one other machine learning model to be trained.

8. The method of any of claims 1-7, wherein the received training data is received from at least one other apparatus, and wherein the received training data includes labels indicative of a classification of the received training data.

9. The method of any of claims 1-8, wherein the request for model training data includes a source address of the request, an identity of the other machine learning model, a type of task, and/or a sample of data and/or an image to be learned.

10. The method of any of claims 1-9, wherein the request is triggered by the at least one apparatus including the at least one other machine learning model failing to perform a task associated with the at least one other machine learning model.

11. An apparatus comprising:

at least one processor; and
at least one memory including program code which when executed causes the apparatus to at least:

receive, by a machine learning model in a training phase, training data, the received training data enabling the machine learning model to train to create, as an output, model training data representative of the received training data;
store a configuration of the machine learning model, the configuration being representative of a trained machine learning model trained to output the model training data representative of the received training data;
receive, by the trained machine learning model in an operations phase, a request, from at least one apparatus, for the model training data;
responsive to the request, create, by the trained machine learning model in the operations phase, the model training data; and
provide, by the trained machine learning model in the operations phase, a response including the model training data to the at least one apparatus to enable training of at least one other machine learning model at the at least one apparatus.

12. The apparatus of claim 11, wherein the program code is further configured to cause the apparatus to perform a method of any of claims 2-10.

13. An apparatus comprising:

means for receiving, by a machine learning model in a training phase, training data, the received training data enabling the machine learning model to train to create, as an output, model training data representative of the received training data;
means for storing a configuration of the machine learning model, the configuration being representative of a trained machine learning model trained to output the model training data representative of the received training data;
means for receiving, by the trained machine learning model in an operations phase, a request, from at least one apparatus, for the model training data;
responsive to the request, means for creating, by the trained machine learning model in the operations phase, the model training data; and
means for providing, by the trained machine learning model in the operations phase, a response including the model training data to the at least one apparatus to enable training of at least one other machine learning model at the at least one apparatus.

14. The apparatus of claim 13 further comprising means for performing a method of any of claims 2-10.

15. A non-transitory computer-readable medium including program code which when executed causes operations comprising:

receiving, by a cloud server including a machine learning model in a training phase, training data, the received training data enabling the machine learning model to train to create, as an output, model training data representative of the received training data;
storing, by the cloud server, a configuration of the machine learning model, the configuration being representative of a trained machine learning model trained to output the model training data representative of the received training data;
receiving, by the cloud server including the trained machine learning model in an operations phase, a request, from at least one apparatus, for the model training data;
responsive to the request, creating, by the trained machine learning model in the operations phase, the model training data; and
providing, by the cloud server including the trained machine learning model in the operations phase, a response including the model training data to the at least one apparatus to enable training of at least one other machine learning model at the at least one apparatus.

**Amended claims in accordance with Rule 137(2) EPC.**

1. A method comprising:

   receiving, by a cloud server including a machine learning model in a training phase, training data, the received training data enabling the machine learning model to train to create, as an output, model training data representative of the received training data;
   storing, by the cloud server, a configuration of the machine learning model, the configuration being representative of a trained machine learning model trained to output the model training data representative of the received training data;
   receiving, by the cloud server including the trained machine learning model in an operations phase, a request, from at least one apparatus, for the model training data;
   responsive to the request, creating, by the trained machine learning model in the operations phase, the model training data; and
   providing, by the cloud server including the trained machine learning model in the operations phase, a response including the model training data to the at least one apparatus to enable training of at least one other machine learning model at the at least one apparatus.

2. The method of claim 1, wherein the machine learning model comprises at least one of a generative model, a deep learning generative model, and/or a neural network.

3. The method of any of claims 1-2 further comprising:
   responsive to the storing, deleting, by the cloud server, the received training data.

4. The method of any of claims 1-3, wherein the model training data simulates the received training data.

5. The method of claim 1-4, wherein the model training data is statistically likely to occur in the received training data.

6. The method of any of claims 1-5 further comprising:
   training, based on the received training data, the machine learning model to create the output comprising the model training data, when the machine learning model is in the training phase.

7. The method of any of claims 1-6, wherein the at least one apparatus comprises, or is comprised in, at least one robot including the at least one other machine learning model to be trained.

8. The method of any of claims 1-7, wherein the received training data is received from at least one other apparatus, and wherein the received training data includes labels indicative of a classification of the received training data.

9. The method of any of claims 1-8, wherein the request for model training data includes a source address of the request, an identity of the other machine learning model, a type of task, and/or a sample of data and/or an image to be learned.

10. The method of any of claims 1-9, wherein the request is triggered by the at least one apparatus including the at least one other machine learning model failing to perform a task associated with the at least one other machine learning model.

11. An apparatus comprising:

means for receiving, by a machine learning model in a training phase, training data, the received training data enabling the machine learning model to train to create, as an output, model training data representative of the received training data;

means for storing a configuration of the machine learning model, the configuration being representative of a trained machine learning model trained to output the model training data representative of the received training data;

means for receiving, by the trained machine learning model in an operations phase, a request, from at least one apparatus, for the model training data;

responsive to the request, means for creating, by the trained machine learning model in the operations phase, the model training data; and

means for providing, by the trained machine learning model in the operations phase, a response including the model training data to the at least one apparatus to enable training of at least one other machine learning model at the at least one apparatus.

12. The apparatus of claim 13 further comprising means for performing a method of any of claims 2-10.

13. A non-transitory computer-readable medium including program code which when executed causes operations comprising:

receiving, by a cloud server including a machine learning model in a training phase, training data, the received training data enabling the machine learning model to train to create, as an output, model training data representative of the received training data;

storing, by the cloud server, a configuration of the machine learning model, the configuration being representative of a trained machine learning model trained to output the model training data representative of the received training data;

receiving, by the cloud server including the trained machine learning model in an operations phase, a request, from at least one apparatus, for the model training data;

responsive to the request, creating, by the trained machine learning model in the operations phase, the model training data; and

providing, by the cloud server including the trained machine learning model in the operations phase, a response including the model training data to the at least one apparatus to enable training of at least one other machine learning model at the at least one apparatus.

**100**

116A

116B

116C

106A

Robot 102A

MLM 104A

Labeled Training Data 130A

108

Robot 102B

MLM 104B

Labeled Training Data 130B

Network 150

110

Robot 102C

MLM 104C

Labeled Training Data 130C

Cloud Server 160

MLM 162

**FIG. 1A**

**100**

FIG. 1B

$S_0$ 210A

265A

$S_1$ 210B

$w_{0j}$

$w_{0j}$ 265B

$A_0$ 260A

$A_1$ 260B

$S_2$ 210C 265C

$w_{2j}$

$A_2$ 260C

250

$A_j(t)$ 270

$S_3$ 210D 265D

$w_{3j}$

$A_3$ 260D

$A_4$ 260E 265E

$w_{4j}$

$S_4$ 210E

$A_5$ 260F

265F

$w_{5j}$

$A_6$ 260G

$S_5$ 210F

265G

$A_7$ 260H

$w_{6j}$

$S_6$ 210G

$w_{7j}$ 265H

$S_7$ 210H

FIG. 2A

**299**

Input Layer 260A

Hidden Layer 260B

Output Layer 260C

250

**FIG. 2B**

**300**

Robots 102A-C

MLM 104A-C

Cloud
Server 160

MLM 162

Robot 102D

MLM 104D

Labeled Training Data Provided 305

Learns to model
training data 310

Attempts a task,
such as classify an
image 312

Request for training
data 315

Generates model
training data 317

Model training Data
Provided 320

Trains using the
modeled training
data 322

Re-attempts the
task, such as classify
an image 325

Labeled Training
Data Provided 330

**FIG. 3**

400

| PROCESSOR 410 | MEMORY 420 | STORAGE DEVICE 430 | INPUT/OUTPUT DEVICES 440 |

| BUS 450 |

**FIG. 4**

EP 3 483 794 A1

**FIG. 5**

22

Europäisches
Patentamt

European
Patent Office

Office européen
des brevets

**EUROPEAN SEARCH REPORT**

Application Number

EP 17 20 0577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/306763 A1 (MEIER PHILIP [US] ET AL) 29 October 2015 (2015-10-29) * [0072, 0088, 0089, 0107, 0126, 0132, 0141, 0142, 0148, 0150, 0156, 0160-0170]; figures 9A-9D * | 1-15 | INV. G06N3/08 G06N99/00 |
| A | SHIBANI SANTURKAR ET AL: "Generative Compression", ARXIV.ORG, CORNELL UNIVERSITY LIBRARY, 201 OLIN LIBRARY CORNELL UNIVERSITY ITHACA, NY 14853, 4 March 2017 (2017-03-04), XP080754260, * Abstract; Sections 3, 4; figure 2 * | 1-15 | |
| A | HUANG YUTAO ET AL: "When deep learning meets edge computing", 2017 IEEE 25TH INTERNATIONAL CONFERENCE ON NETWORK PROTOCOLS (ICNP), IEEE, 10 October 2017 (2017-10-10), pages 1-2, XP033262232, DOI: 10.1109/ICNP.2017.8117585 [retrieved on 2017-11-21] * Section II.A * | 1-15 | |
| A | JEREMY LIU ET AL: "Autoencoder-derived Features as Inputs to Classification Algorithms for Predicting Well Failures", SPE WESTERN REGIONAL MEETING, 27-30 APRIL, GARDEN GROVE, CALIFORNIA, USA, 1 January 2015 (2015-01-01), XP055473788, DOI: 10.2118/174015-MS ISBN: 978-1-61399-404-7 * page 2 * | 1-15 | |

TECHNICAL FIELDS SEARCHED (IPC)

G06N
B25J

-/--

The present search report has been drawn up for all claims

| Place of search | Date of completion of the search | Examiner |
|---|---|---|
| The Hague | 9 May 2018 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 17 20 0577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ISHAN DURUGKAR ET AL: "Generative Multi-Adversarial Networks", ARXIV.ORG, CORNELL UNIVERSITY LIBRARY, 201 OLIN LIBRARY CORNELL UNIVERSITY ITHACA, NY 14853, 5 November 2016 (2016-11-05), XP080729613, * figure 1 * | 1-15 | |
| A | Leon Sixt ET AL: "RenderGAN: Generating Realistic Labeled Data", , 12 January 2017 (2017-01-12), XP055472473, Retrieved from the Internet: URL:https://arxiv.org/pdf/1611.01331.pdf [retrieved on 2018-05-03] * Abstract; Section 1 * | 1-15 | |

TECHNICAL FIELDS
SEARCHED      (IPC)

The present search report has been drawn up for all claims

| Place of search | Date of completion of the search | Examiner |
|---|---|---|
| The Hague | 9 May 2018 | Szymanski, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 0577

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2018

| Patent document cited in search report | Publication date | Patent family member(s) | Publication date |
|---|---|---|---|
| US 2015306763 A1 | 29-10-2015 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IAN GOODFELLOW ; YOSHUA BENGIO ; AARON COURVILLE.** Deep Learning. MIT Press, 2016
- **IAN J. GOODFELLOW.** *Generative Adversarial Nets*
- **JOST TOBIAS SPRINGENBERG.** *Unsupervised and Semi-Supervised Learning with Categorical Generative Adversarial Networks*
- **DIEDERIK P. KINGMA.** *Auto-Encoding Variational Bayes*